Europäisches Patentamt

European Patent Office

Office européen des brevets

(19)

(11) Veröffentlichungsnummer: **0 499 936 A1**

## (12) EUROPÄISCHE PATENTANMELDUNG

(21) Anmeldenummer: **92102190.3**

(22) Anmeldetag: **10.02.92**

(51) Int. Cl.⁵: **H01M 8/12**, H01M 8/24

(30) Priorität: **16.02.91 DE 4104839**

(43) Veröffentlichungstag der Anmeldung:
**26.08.92 Patentblatt 92/35**

(84) Benannte Vertragsstaaten:
**CH DE FR GB LI SE**

(71) Anmelder: **ABB PATENT GmbH**
**Kallstadter Strasse 1**
**W-6800 Mannheim 31(DE)**

(72) Erfinder: **Rohr, Franz-Josef, Dr.**
**Forstweg 2**
**W-6941 Abtsteinach(DE)**
Erfinder: **Stadelmann, Heinz, Dr.**
**Im Schilling 16**
**W-6906 Leimen(DE)**

(74) Vertreter: **Rupprecht, Klaus, Dipl.-Ing. et al**
**c/o ABB Patent GmbH, Postfach 10 03 51**
**W-6800 Mannheim 1(DE)**

(54) **Brennstoffzelle.**

(57) Die Erfindung bezieht sich auf eine Brennstoffzelle mit Festelektrolyt. Zur Verbesserung der üblicherweise kathodenseitigen Luftelektrode wird vorgeschlagen, diese Luftlektrode zweischichtig auszuführen, wobei eine auf den Festelektrolyten (7) aufgebrachte erste Luftelektrodenschicht (16) dünn ausgeführt und aus porösem Kathodenmaterial hergetellt ist, während die zweite Luftelektrodenschicht (17) relativ dick ausgeführt und aus elektrisch gut leitendem Material hergestellt ist. Die zweite Luftelektrodenschicht (17) ist strukturiert zu Leiterbahnen (18) und Zwischenräumen (19), wodurch ein Luftzutritt zur ersten Luftelektrodenschicht (16) gewährleistet ist. Die Erfindung kann in Hochtemperatur-Brennstoffzellenbatterien Anwendung finden.

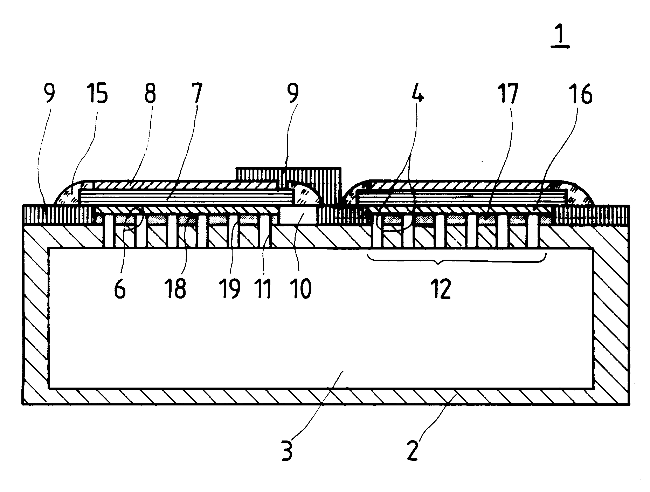

Signifikant ist die einzige Figur der Zeichnung.

Die Erfindung bezieht sich auf eine Brennstoffzelle, die eine Anode, einen Festelektrolyten und als Kathode eine Luftelektrode aufweist. Als Luftelektrode wird diejenige Elektrode bezeichnet, die in einer Brennstoffzellenbatterie mit einem sauerstoffhaltigen Gas, z.B. Luft, in Kontakt kommt. Außerdem bezieht sich die Erfindung auf ein geeignetes Herstellverfahren.

Zur typischen Anwendung der Brennstoffzelle im Rahmen einer Brennstoffzellenbatterie werden Brennstoffzellenanordnungen gebildet, die aus einem keramischen Träger mit mehreren darauf angeordneten Brennstoffzellen bestehen.

Eine solche Brennstoffzellenanordnung ist aus der DE-OS 39 07 485 bekannt. Dieser Druckschrift sind Einzelheiten zum Aufbau und zur Arbeitsweise einer Brennstoffzellen-Batterie zu entnehmen, die Brennstoffzellenanordnungen mit Gruppen von in Serie oder parallel geschalteten Brennstoffzellen enthält. In einer solchen Brennstoffzellen-Batterie wird den Kathoden der Brennstoffzellen ein sauerstoffhaltiges Gas, z.B. Luft, zugeleitet und an den Außenflächen der Anoden der Brennstoffzellen wird ein gasförmiger oder vergaster Brennstoff vorbeigeleitet. Der zum Aufbau der Brennstoffzellenanordnung benutzte Träger ist eine Grundplatte, auf der Brennstoffzellen nebeneinander angeordnet und elektrisch miteinander verbunden sind. Der Träger muß aber auch den Zugang der Luft zur Kathode der Brennstoffzelle ermöglichen. In der DE-OS 39 07 485 sind zu diesem Zweck plattenförmige keramische Träger vorgesehen, die im Inneren Hohlräume zur Luftfuhrung aufweisen. Der Zutritt von Luft vom Luftkanal durch die Wand des Trägers zu den Kathoden der Brennstoffzellen ist dadurch ermöglicht, daß der Träger aus porösem Material hergestellt und somit gasdurchlässig ausgeführt ist. Andererseits muß die aus Träger und Brennstoffzelle bestehende Brennstoffzellenanordnung einen direkten Kontakt der Luft mit dem Brennstoff unterbinden, also an mehreren Stellen mit geeigneten Schichten abgedichtet werden.

Bei der aus der DE-OS 39 07 485 bekannten Anordnung werden die Brennstoffzellen bildenden Schichten, also für Kathoden, Festelektrolyten und Anoden sowie die zur elektrischen Verschaltung erforderlichen elektrisch leitenden Schichten und Isolierschichten nacheinander durch Masken und Sinterprozesse aufgebracht. Gemäß der nicht vorveröffentlichten deutschen Patentanmeldung P 40 11 506.2 können die einzelnen Brennstoffzellen aber auch als vorgefertigte Komponenten hergestellt und auf den Träger aufgeklebt werden.

Anstelle eines porösen Trägers kann auch - abweichend vom Stand der Technik - ein gasdicht gesinterter Träger verwendet werden, der nur in seinen von Brennstoffzellen bedeckten Wandbereichen gasdurchlässig gestaltet ist, z.B. durch die Anordnung von Kanälen, die eine Zufuhr von sauerstoffhaltigem Gas, z.B. Luft, zur Kathode ermöglichen.

Das sauerstoffhaltige Gas muß nicht nur durch die Wand des Trägers, sondern auch durch den Kleber zur Kathode geführt werden. In der Anmeldung P 40 11 506.2 ist als Kleber eine poröse Schicht aus einem elektrisch leitenden Perowskitmischoxid angegeben. Der elektrisch leitende Kleber soll die Querleitfähigkeit der Kathode unterstützen.

Es hat sich gezeigt, daß die bekannte Ausführung der Brennstoffzellen auch unter Berücksichtigung einer Unterstützung durch einen elektrisch leitfähigen Kleber nicht im vollen Umfang den Anforderungen genügt. Da sich an der Grenzfläche zwischen Luftelektrode, Gas und Elektrolyt die elektrochemischen Reaktionen zur Stromgewinnung abspielen, ist eine hohe Porosität des Kathodenmaterials notwendig, d.h. die Anzahl der katalytischen Zentren soll hoch sein. Die Kathodenelektrode soll außerdem möglichst dünn sein, um einen Gastransport an diese Zentren zu gewährleisten. Einer dünnen und porösen Ausführung der Kathodenelektrode steht aber die außerdem bestehende Forderung nach guter elektrischer Leitfähigkeit entgegen. Durch Verwendung eines elektrisch leitenden Klebers kann die Leitfähigkeit nicht in wünschenswertem Umfang verbessert werden, weil der Kleber porös ausgeführt ist und somit keine hohe spezifische Leitfähigkeit aufweist. Der Kleber darf auch nicht, etwa mit dem Ziel die Querleitfähigkeit zu verbessern, besonders dick aufgetragen werden, weil dadurch die Luftzufuhr zur Elektrode beeinträchtigt wäre.

Der Erfindung liegt daher die Aufgabe zugrunde, eine Brennstoffzelle anzugeben, die mindestens eine Anode, einen Festelektrolyten und eine kathodenseitige Luftelektrode aufweist und deren Luftelektrode sowohl gute katalytische als auch gute elektrische Eigenschaften hat. Außerdem soll ein Verfahren zur Herstellung der Brennstoffzelle bzw. einer Anordnung mehrerer Brennstoffzellen auf einem Träger angegeben werden.

Der erste Teil der Aufgabe wird durch eine Brennstoffzelle gelöst, die eine Anode, einen Festelektrolyten und eine Kathode aufweist, wobei die Kathode die als Luftelektrode bezeichnete, mit sauerstoffhaltigem Gas, z.B. Luft, in Berührung kommende Elektrode ist, und wobei die Luftelektrode aus wenigstens zwei übereinanderliegenden Materialschichten besteht. Die erste Luftelektrodenschicht besteht aus einer maximal 70 µm dicken Schicht eines porösen Kathodenmaterials. Die zweite Luftelektrodenschicht besteht aus einer mindestens 250 µm dicken Schicht eines möglichst dichten und elektrisch gut leitenden Perowskits, wobei die zweite Luftelektrodenschicht strukturiert ist, so daß Zwischenräume für einen Gasdurchtritt durch die zweite Luftelektrodenschicht vorhanden sind.

Der zweite Teil der Aufgabe wird durch ein Verfahren zur Herstellung einer Anordnung von Brennstoffzellen auf einem keramischen Träger gelöst, bei dem Brennstoffzellen als Komponenten vorgefertigt werden, die nur die erste Luftelektrodenschicht tragen, und außerdem ein keramischer Träger durch Aufbringen der zweiten Luftelektrodenschicht in Form von Leiterbahnen mit Zwischenräumen vorbereitet wird, und anschließend die so vorgefertigten Teile zusammengesetzt und gesintert werden. Dabei werden die beiden Luftelektrodenschichten ohne zusätzlichen Kleber elektrisch und mechanisch miteinander verbunden.

Die mit der Erfindung vorgeschlagene Aufteilung der Luftelektrode in zwei Schichten hat den Vorteil, daß durch die damit erzielte Funktionsaufteilung eine Materialoptimierung für kathalytische Umsetzung bzw. elektrische Leitfähigkeit im jeweiligen Funktionsbereich ermöglicht wird. Es wird ein rascher Gasaustausch und somit eine hohe Umsetzrate in der Luftelektrode erzielt. Die ohmschen Verluste der neuen Luftelektrode sind verringert. Die vorgeschlagenen Schichten der Luftelektrode sind durch Siebdruck auf einfache Weise realisierbar.

Eine nähere Beschreibung der Erfindung erfolgt nachstehend anhand der Zeichnung.

Die schematische Darstellung zeigt einen Schnitt durch eine Brennstoffzellenanordnung 1 mit einem gasdichten keramischen Träger 2 und zwei darauf angeordneten Brennstoffzellen 4. Der Träger 2 weist in Wandbereichen 12, die von Brennstoffzellen 4 bedeckt sind, Kanäle 11 auf, die einen Durchtritt von Luft aus einem Hohlraum 3 des Trägers 2 zu den Brennstoffzellen 4 ermöglichen.

Die Brennstoffzellen 4 bestehen jeweils aus einem Festelektrolyten 7 mit einer Anode 8 auf der Brennstoffseite und einer Kathode oder Luftelektrode 6 auf der Sauerstoffseite. Die Luftelektrode 6 besteht aus einer ersten Luftelektrodenschicht 16 und einer zweiten Luftelektrodenschicht 17.

Die Luftelektroden 6 von nebeneinander angeordneten Brennstoffzellen 4 sind durch eine Schicht aus Isoliermaterial 10 voneinander getrennt. Eine als Interkonnektor 9 bezeichnete elektrisch leitende Verbindungsschicht stellt eine elektrische Verbindung zwischen der Anode der ersten Brennstoffzelle und der Kathode der zweiten Brennstoffzelle her, womit eine Serienschaltung realisiert ist. Zur Verbesserung der Gasdichtigkeit ist eine Glasschicht 15 am Rand der Brennstoffzellen 4 vorgesehen.

Die dargestellte Anordnung kann hergestellt werden, indem zuerst die Brennstoffzellen 4 und der Träger 2 als getrennte Komponenten vorbereitet und anschließend zusammengesintert werden. Dabei werden die Brennstoffzellen 5 jeweils durch Aufbringen der Anode 8 und der ersten Luftelektrodenschicht 16 auf dem Festelektrolyten 7 vorbereitet. Die erste Luftelektrodenschicht 16 ist eine möglichst dünne, jedenfalls weniger als 70 $\mu$m dicke Schicht aus einem porösen Kathodenmaterial, z.B. aus strontiumdotierten Lanthan-Manganit. Sie wird durch Siebdruck auf den Festelektrolyten 7 aufgebracht und eingebrannt.

Der Träger 2 wird durch Extrusion einer Masse aus keramischem Pulver und Extrusionszusätzen hergestellt, wobei im grünen Zustand die Kanäle 11, z.B. mit Hilfe eines Nadelkamms, gestanzt werden. Nach einem Sinterprozeß ist der Träger 2 gasdicht, abgesehen von den Kanälen 11 in den Wandbereichen 12. Auf den Träger 2 wird in den Wandbereichen 12 die zweite Luftelektrodenschicht 17 durch Siebdruck aufgebracht und zwar vorzugsweise in Form von schmalen, parallel angeordneten Leiterbahnen 18 mit ausreichend breiten Zwischenräumen 19, die einen Luftzutritt zur ersten Luftelektrodenschicht 16 ermöglichen.

Die Leiterbahnen 18 überdecken nicht die Kanäle 11. Die zweite Luftelektrodenschicht 17 sollte 250 bis 300 $\mu$m dick sein und aus einem dichten, elektrisch gut leitenden Perowskit bestehen. Der Träger 2 wird außerdem durch strukturiertes Aufbringen von Isoliermaterial 10 und Interkonnektmaterial 9 vorbereitet.

Die Anordnung wird anschließend nach Auflegen der vorbereiteten Brennstoffzellen 4 auf den Träger 2 zusammengesintert. Nach weiteren Schritten, in denen eine Abdeckung der Brennstoffzellenränder mit Glas 15 hergestellt und durch Aufbringen von weiterem Interkonnektmaterial 9 eine Serienschaltung der Zellen hergestellt wird, ist die gesamte Brennstoffzellenanordnung fertiggestellt.

## Patentansprüche

1. Brennstoffzelle, die eine Anode, einen Festelektrolyten und eine kathodenseitige Luftelektrode aufweist, dadurch gekennzeichnet, daß die Luftelektrode (6) aus wenigstens zwei übereinanderliegenden Materialschichten besteht, wobei

   - die erste Luftelektrodenschicht (16) aus einer maximal 70 $\mu$m dicken Schicht eines porösen Kathodenmaterials besteht und

   - die zweite Luftelektrodenschicht (17) aus einer mindestens 250 $\mu$m dicken Schicht eines möglichst dichten und elektrisch gut leitenden Perowskits besteht und

   - wobei die zweite Luftelektrodenschicht (17) strukturiert ist, so daß Zwischenräume (19) für einen Gasdurchtritt durch die zweite Luftelektrodenschicht (17) vorhanden sind.

2. Brennstoffzelle nach Anspruch 1, dadurch gekennzeichnet, daß die erste Luftelektrodenschicht (16) aus strontiumdotiertem Lanthan-Manganit besteht.

3. Brennstoffzelle nach einem der vorstehenden Ansprüche, dadurch gekennzeichnet, daß die Brennstoffzelle (4) - gegebenenfalls zusammen mit weiteren Brennstoffzellen (4) - auf einem keramischem Träger (2) aufgebracht ist.

4. Brennstoffzelle nach Anspruch 3, dadurch gekennzeichnet, daß der keramische Träger (2) gasdicht ausgeführt ist und in Wandbereichen (12), die von Luftelektroden (6) bedeckt sind, Kanäle (11) für eine Luftzufuhr durch die Wand des Trägers aufweisen.

5. Verfahren zur Herstellung einer Anordnung von Brennstoffzellen auf einem Träger nach Anspruch 3 oder 4, dadurch gekennzeichnet, daß
    - die Brennstoffzellen als Komponenten vorgefertigt werden, wobei auf den Festelektrolyten die erste Luftelektrodenschicht im Siebdruckverfahren aufgebracht und eingebrannt wird,
    - der keramische Träger vorbereitet wird durch Aufbringen einer zu Leiterbahnen strukturierten zweiten Luftelektrodenschicht sowie gegebenenfalls zusätzlicher zur elektrischen Verschaltung der Brennstoffzelle erforderlichen Schichten aus Isoliermaterial oder Interkonnektmaterial und
    - die vorgefertigten Brennstoffzellen mit dem vorbereiteten Träger zusammengesintert werden, wodurch die erste und die zweite Luftelektrodenschichten der Brennstoffzellen kontaktiert werden.

Europäisches
Patentamt

**EUROPÄISCHER RECHERCHENBERICHT**

Nummer der Anmeldung

EP    92 10 2190

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | EP-A-0 361 383 (NKK CORPORATION) <br> * Seite 4, Zeile 43 - Zeile 54 * <br> * Seite 5, Zeile 19 - Zeile 24; Abbildung 3 * <br> --- | 1,2 | H01M8/12 <br> H01M8/24 |
| A | DE-A-3 922 673 (SIEMENS AG.) <br> * Spalte 7, Zeile 16 - Zeile 21; Anspruch 6 * <br> --- | | |
| A | CHEMICAL ABSTRACTS, vol. 110, no. 20, <br> 15. Mai 1989, Columbus, Ohio, US; <br> abstract no. 176714Q, <br> M. KAZUTAKA ET ALL: 'Oxygen cathodes for <br> solid-state fuel cells' <br> & JP01010576 (MITSUBISHI HEAVY INDUSTRIES) <br> (13-01-1989) <br> * Zusammenfassung * <br> --- | | |
| A | DE-A-4 033 284 (ASEA BROWN BOVERI AG.) <br> * Seite 3, Zeile 50 - Zeile 56 * <br> * Seite 3, Zeile 62 - Zeile 66; Abbildung 8 * <br> --- | 5 | |
| D,P, X | EP-A-0 452 737 (ABB PATENT GMBH) <br><br> * Spalte 2, Zeile 7 - Zeile 14 * <br> * Spalte 2, Zeile 58 - Spalte 3, Zeile 57; Abbildungen 1,2,4 * <br> * Spalte 4, Zeile 19 - Zeile 38 * | 5 | **RECHERCHIERTE SACHGEBIETE (Int. Cl.5)** <br><br> H01M <br> G01N |
| D,P, A | * Ansprüche 8,10 * <br><br> --- | 1-3 | |
| D,A | EP-A-0 387 643 (ASEA BROWN BOVERI) <br><br> ----- | | |

Der vorliegende Recherchenbericht wurde für alle Patentansprüche erstellt

| Recherchenort | Abschlußdatum der Recherche | Prüfer |
|---|---|---|
| DEN HAAG | 27 MAI 1992 | D'HONDT J.W. |